# FASCICULE DE BREVET EUROPEEN

(11) **EP 0 451 031 B1**
(45) Date de publication et mention de la délivrance du brevet: **17.05.1995**
(21) Numéro de dépôt: 91400852.9
(22) Date de dépôt: 29.03.1991
(51) Int. Cl.: D21F 1/66, D21C 9/00, C02F 9/00, D21C 5/02, C02F 3/34

(54) **Procédé de traitement d'eaux recyclées destinées à diluer une pate papetière**
Verfahren zur Behandlung der zum Verdünnen von Zellstoff bestimmten rückgewonnenen Abwässern
Process for treating recycled waters intented to dilute a paper pulp

(30) Priorité: 06.04.1990 FR 9004415
(43) Date de publication de la demande: 09.10.1991
(73) Titulaire: SMURFIT-CELLULOSE DU PIN, 33380 Biganos (FR)
(72) Inventeur: Pommier, Jean-Claude, F-33170 Gradignan (FR); Rousset, Christian, F-33470 Gujan-Mestras (FR); Fuentes, Jean-Luc, F-33140 Villenave d'Ornon (FR); Goma, Gérard, F-31520 Tramonville-Saint-Agne (FR)
(74) Mandataire: Muller, René

(56) Documents cités:
- EP-A- 0 262 040
- EP-A- 0 334 739
- FR-A- 2 641 803
- US-A- 3 406 089

## Description

La présente invention concerne l'industrie papetière et en particulier l'industrie papetière qui utilise en tant que matières premières, au moins en partie, des fibres papetières recyclées ou vieux papiers.

L'industrie papetière utilise de plus en plus de fibres papetières recyclées ou vieux papiers en tant que matières premières. Avant de pouvoir être utilisés sur la machine à papier, les vieux papiers doivent subir différents traitements d'épuration. Ainsi, généralement, les vieux papiers sont introduits dans un pulpeur dans lequel ils sont déchiquetés et duquel ils en sortent sous forme d'une pâte à environ 2 à 4 % de matières sèches. Cette pâte est ensuite épaissie dans des presses jusqu'à une concentration d'environ 30 à 35 % pour subir un traitement à chaud servant notamment à disperser les paraffines. Cette pâte est ensuite diluée jusqu'à une concentration d'environ 3 % en matières sèches pour pouvoir être entrainée jusqu'aux stations d'épuration où elle est soumise à différents traitements et en particulier à des traitements par hydrocyclonage, qui servent à éliminer de la pâte les agents contaminants tels que : les paraffines agglomérées, les matières plastiques, le sable, etc... Ces traitements d'épuration sont d'autant plus efficaces que la pâte est diluée, et c'est pourquoi on est amené généralement à diluer la pâte jusqu'à une concentration d'environ 1 % en matières sèches, pour la soumettre à ces traitements.

Après avoir été soumise à ces traitements d'épuration, la pâte est concentrée à nouveau par passage dans un filtre épaississeur jusqu'à une concentration de l'ordre de 5 % environ, pour être stockée dans l'attente d'être utilisée sur la machine à papier.

La concentration par passage dans un filtre épaississeur s'opère par un égouttage de l'eau en excès à travers ce filtre, généralement un filtre rotatif. Le rendement du filtre épaississeur est d'autant plus élevé que ses capacités d'égouttage sont grandes.

Or, les dilutions décrites précédemment, dans le pulpeur et pour les traitements d'épuration suivants, s'effectuent essentiellement par apport d'eaux de recyclage qui proviennent du circuit de traitement des vieux papiers et éventuellement partiellement des eaux sous toile de la machine à papier.

Ces eaux de recyclage contiennent des fines et des fibrilles, c'est-à-dire des fibres papetières de très petites dimensions, de sorte que le degré Schopper-Riegler (°SR) de ces eaux est élevé, par exemple supérieur à 40.

Le degré Schopper-Riegler (°SR) d'une pâte papetière exprime l'aptitude de l'eau à se séparer de la suspension dans les conditions définies par la norme NFQ 50 003. Sur une échelle allant de 0 à 100, une valeur élevée du °SR traduit une faible vitesse d'égouttage de la suspension tandis qu'une valeur faible traduit une vitesse d'égouttage plus rapide.

Ainsi la pâte diluée qui arrive au filtre épaississeur présente un degré SR élevé, ce qui influe sur les capacités d'égouttage et sur la marche du filtre épaississeur. Pour un débit de pâte donné, plus le degré SR est élevé et moins la pâte en sortie du filtre sera concentrée. Pour maintenir la pâte à une concentration satisfaisante en sortie du filtre épaississeur, il faut alors diminuer le débit et par là, la production de pâte à base de fibres recyclées.

L'invention obvie aux inconvénients cités. Elle propose un procédé de traitement des eaux de recyclage servant à diluer une pâte papetière destinée à être égouttée, qui permet d'abaisser le degré SR de l'eau recyclée et par là celui de la pâte diluée avec cette eau recyclée.

Selon le procédé de l'invention, on fait agir sur l'eau recyclée servant à diluer une pâte papetière, une préparation enzymatique contenant des cellulases et/ou des hémi-cellulases et/ou toutes autres enzymes ayant une action sur tout ou partie des constituants des fibres cellulosiques entrainant une diminution du degré Schopper de l'eau recyclée, et par là une amélioration de l'égouttabilité de la pâte papetière diluée avec cette eau.

Sous un des aspects avantageux de l'invention, le traitement par les préparations enzymatiques de l'eau recyclée est un traitement de l'eau recyclée destinée à diluer une pâte papetière devant être épurée de ses contaminants, puis passée dans un filtre rotatif épaississeur.

Les préparations enzymatiques convenables sont toutes les préparations enzymatiques contenant des cellulases et/ou hemicellulases, et/ou d'autres enzymes telles que les estérases, les manamases, etc...

De préférence, on choisit les préparations enzymatiques qui présentent une activité C₁, une activité Cx et une activité xylanasique. Ces trois activités sont définies par la nomenclature internationale des enzymes et elles peuvent être qualifiées et exprimées en unités du système international par milligramme de poudre de la préparation enzymatique considérée. L'activité C₁ est l'action de la cellobiohydrolase pouvant être dosée sur de la cellulose pure très organisée. Cette activité se manifeste par la production de la cellobiose et le système international a retenu le substrat AVICEL comme substrat de référence. L'activité Cₓ est dosée sur de la cellulose modifiée, la carboxyméthylcellulose par exemple, et elle est quantifiée par une chute de la viscosité de la carboxyméthylcellulose ou une augmentation des activités réductrices. L'activité xylanasique permet une hydrolyse des xylanes de liaison.

Les quantités d'enzymes utilisées pour le traitement selon l'invention peuvent s'exprimer par rapport à la quantité de pâte à diluer à l'aide de l'eau recyclée, c'est-à-dire par rapport à une production en pâte dans un procédé fonctionnant en continu.

Ainsi, on traite l'eau recyclée par introduction de quantité comprise entre 0,1 kg et 20 kg (sensiblement entre 0,1 litre et 20 litres) de préparation enzymatique pour une production de 1000 kg de pâte sèche à l'heure. Ces quantités correspondent à une préparation enzymatique présentant une activité C₁ de 0,168 USI par milligramme de poudre, une activité Cₓ de 3,91 USI par milligramme de poudre et une activité xylanasique de 31 USI par milligramme de poudre, pour la poudre Maxazyme CL 2000.

L'action des enzymes est généralement dépendante du pH du milieu réactionnel. Lorsqu'on utilise par exemple des préparations enzymatiques dérivées du microorganisme Trichoderma viridae, il faut se placer de préférence dans un milieu à pH acide. Et, on peut être amené à modifier le pH du milieu pour le rendre convenable, par ajout d'acide tel de l'acide sulfurique.

Dans une variante, on peut utiliser des enzymes adaptés au pH du milieu. Notamment, lorsque le pH est compris entre 5 et 9, on peut avantageusement utiliser une préparation enzymatique contenant des enzymes choisies parmi celles dérivées du champignon Humicola insolens et de la bactérie Cellulomonas, par exemple les enzymes obtenues à partir des souches référencées CBS 39 269, CBS 14 764, ATCC 16 454, ATCC 26 908, ATCC 34 627 pour le champignon Humicola insolens et UDA 8 200, FIMI 11 341, UDA 11 494 pour la bactérie Cellulomonas.

Les quantités d'enzymes utilisées selon l'invention dépendent aussi de la durée du traitement, c'est-à-dire de la durée de contact entre les enzymes et l'eau recyclée, durée qui correspond sensiblement à la durée d'un cycle de recyclage. Cette durée d'un cycle de recyclage dépend des installations de l'usine à papier, et/ou de l'atelier de traitement des vieux papiers, en particulier, des débits de la pâte et de la taille des cuviers dans lesquels passe l'eau recyclée. Généralement, la durée d'un cycle est de l'ordre de 10 à 20 minutes.

Par le traitement selon l'invention, on baisse le degré SR de l'eau recyclée de plusieurs points et en moyenne d'une dizaine de points.

L'utilisation de l'eau recyclée traitée par les enzymes selon l'invention permet d'abaisser le degré SR de la pâte à l'entrée du filtre épaississeur sensiblement en proportion, c'est-à-dire de plusieurs points.

Au niveau du filtre épaississeur, on observe soit une cadence de production plus forte pour une même concentration de pâte en sortie du filtre, soit une concentration plus forte pour un même débit. Le rendement du filtre est amélioré dans tous les cas.

Un autre avantage du traitement selon l'invention est qu'il permet également d'abaisser le degré SR de la pâte que l'on retrouve à la sortie du filtre épaississeur. Cette baisse du degré SR de la pâte autorise le cas échéant un raffinage plus important de la pâte lorsqu'il s'agit de pâte à base de fibres recyclées et éventuellement l'utilisation d'une matière première de plus basse qualité.

Cette baisse du degré SR de la pâte obtenue par le traitement de l'eau de recyclage peut aussi améliorer l'égouttage lors de la formation de la feuille de la suspension papetière qui utilise au moins en partie la pâte à base de vieux papiers obtenue précédemment.

Sous un autre des aspects de l'invention, le traitement par les préparations enzymatiques de l'eau recyclée est un traitement de l'eau recyclée destinée à diluer une pâte papetière pour l'amener en caisse de tête à la concentration désirée. La pâte papetière peut être à base de fibres cellulosiques vierges ou recyclées ou d'un mélange de ces fibres. Sous cet aspect de l'invention, l'eau recyclée est donc l'eau sous toile. Cette eau sous toile contient des fines et des fibrilles comme dans le cas de l'eau recyclée utilisée comme décrit précédemment pour diluer une pâte à base de vieux papiers. Cette eau sous toile présente donc un degré SR élevé. Son utilisation pour la dilution de la suspension en caisse de tête entraine une augmentation du degré Schopper de la suspension qui, néanmoins avantageusement, le cas échéant, a pu être traitée par une préparation enzymatique comme décrit par exemple dans la publication du brevet européen EP 0 262 040.

Le traitement par une préparation enzymatique de l'eau sous toile recyclée est avantageux si la durée d'action des enzymes sur les particules contenues dans l'eau recyclée est suffisante. Afin d'obtenir cette durée d'action nécessaire on peut prévoir selon l'invention le passage de l'eau recyclée sous toile à travers un ou plusieurs cuviers de taille appropriée dans le circuit de recyclage.

Le traitement selon l'invention d'une eau recyclée destinée à diluer une pâte papetière qui par la suite sous sa forme diluée doit être égouttée, apporte donc une amélioration dans les capacités d'égouttage des divers dispositifs utilisés au cours de la fabrication du papier ou carton, tels que les filtres épaississeurs, les toiles, etc...

Sous un des aspects avantageux de l'invention, on combine un traitement des eaux recyclées qui peut être l'eau recyclée pour la dilution de la pâte pour son épuration et/ou l'eau recyclée sous toile à l'aide d'une préparation enzymatique, avec un traitement de la composition papetière à l'aide d'une autre préparation enzymatique qui peut utiliser les mêmes enzymes. Un traitement d'une composition papetière est décrit par exemple dans la publication de brevet européen EP 0 262 040 dont on incorpore ici la description par cette référence.

La combinaison des deux traitements améliore notamment la machinabilité de la pâte papetière, et le rendement des dispositifs d'égouttage.

D'autres avantages et caractéristiques de l'invention apparaitront dans les exemples de réalisation décrits par la suite.

### Exemple témoin

Cet exemple est un exemple industriel d'une fabrication d'une pâte à base de vieux papiers qui n'utilise pas le traitement enzymatique selon l'invention pour l'eau recyclée destinée à diluer la pâte dans un atelier de production de pâte à partir de vieux papiers.

Les vieux papiers sont introduits dans un pulpeur à raison de 6 tonnes/heure. A la sortie du pulpeur, on recueille une pâte à environ 3 % de matières sèches. Cette pâte est ensuite épaissie par passage dans des presses jusqu'à une concentration de 30 % environ pour subir un traitement à chaud destiné notamment à disperser les paraffines. Cette pâte est ensuite diluée par apport d'eau recyclée jusqu'à une concentration d'environ 3 % pour pouvoir être transportée dans des conduits jusqu'aux cuviers de stockage ou directement jusqu'aux différents postes de traitements d'épuration et en particulier à un traitement par hydrocyclonage. Avant de faire passer la pâte dans le cyclone, on la dilue encore jusqu'à une concentration d'environ 1 % par apport d'eau recyclée. Lorsque les différents traitements d'épuration ont été réalisés sur la pâte diluée, celle-ci est amenée à un filtre rotatif épaississeur qui par égouttage de l'eau à travers le filtre fait passer la pâte d'une concentration de 1 % environ à 5 % environ. La pâte ainsi concentrée peut ensuite être stockée dans l'attente d'une utilisation sur la machine à papier. L'eau égouttée est récupérée pour être envoyée dans un cuvier d'environ 120 m³. Cette eau est recyclée et elle est utilisée à nouveau pour diluer une nouvelle pâte dans le pulpeur et après le traitement à chaud, et avant le traitement d'hydrocyclonage. Le degré SR de l'eau recyclée dans le cuvier est d'environ 43, celui de la pâte diluée à l'entrée du filtre épaississeur est de 40 environ.

### Exemple 1

On opère de la même façon que dans l'exemple témoin sauf qu'on introduit une préparation enzymatique à raison de 11 litres/h dans le cuvier de 120 m³ par lequel passe l'eau recyclée. Cette préparation enzymatique est à base de cellulases et commercialisée sous l'appellation Liftase A 40 par la société BIOPULP International.

Le pH de l'eau recyclée dans le cuvier a été baissé au préalable par ajout d'acide sulfurique jusqu'à un pH de 5 environ. Le temps de séjour calculé de l'eau recyclée dans le cuvier est d'environ 14 minutes.

Lorsque le cycle de l'atelier de production s'est équilibré, on a mesuré les concentrations à l'entrée et à la sortie du filtre épaississeur. A l'entrée, la concentration est toujours d'environ 1 %, alors qu'à la sortie la concentration de la pâte est passée à 6 %. L'augmentation est donc de l'ordre de 20 % par rapport à l'exemple témoin. Les mesures des degrés SR sont de 32 pour l'eau recyclée dans le cuvier, et de 33 pour la pâte diluée à l'entrée du filtre épaississeur.

On observe également une baisse du niveau de la pâte à l'entrée du filtre épaississeur, ce qui est une indication d'un bon égouttage.

### Exemple 2

On opère comme dans l'exemple 1, sauf qu'on remplace la préparation enzymatique de cet exemple par une autre préparation, à savoir une solution aqueuse d'une poudre de Maxazyme CL 2000 commercialisée par la société française Rapidase.

Pour les mêmes débits de production de pâte à partir de vieux papiers que dans l'exemple 1, on ajoute à l'eau recyclée, placée à un pH de 4,5, dans le cuvier précité, 10 l/heure de préparation enzymatique. Lorsque le circuit s'est équilibré, on mesure les concentrations de la pâte à l'entrée et à la sortie du filtre épaississeur.

A l'entrée, avant le filtre, la concentration est de 1 % environ en matières sèches. A la sortie du filtre épaississeur, on obtient une concentration de 5,8 % en matières sèches.

On observe donc à nouveau un bien meilleur égouttage de la pâte au niveau du filtre épaississeur que dans l'exemple témoin. L'amélioration calculée par rapport à la concentration en sortie du filtre épaississeur est de l'ordre de 16 %.

### Exemple témoin 2

Cet exemple concerne la mise en oeuvre d'une machine à papier industrielle.

La composition fibreuse de départ est constituée de 95 % en poids de caisses de carton de récupération et de 5 % en poids de gros de magasin. A l'aide d'un pulpeur, on en fait en continu une suspension aqueuse à 3 % de fibres recyclées. Cette suspension passe dans les différents épurateurs et cuviers de stockage usuels.

Puis la suspension est envoyée en caisse de tête après avoir été amenée juste avant à une concentration de 9,5 g/l de manière à obtenir le meilleur compromis entre une égouttabilité correcte et une production maximale. La production obtenue est de 3,89 tonnes/h de papier couverture.

### Exemple 3

On opère comme dans l'exemple témoin 2, sauf qu'on traite l'eau sous toile recyclée par introduction de 10 litres/h d'une préparation enzymatique Liftase A 40, dans un cuvier de 400 m³ placé entre la toile de la machine à papier et la caisse de tête. Le temps calculé de passage de l'eau recyclée dans le cuvier est d'environ 15 minutes. L'eau sous toile, recyclée, en sortie du cuvier est utilisée pour diluer la pâte papetière de l'exemple témoin 2 pour l'amener à une concentration de 7,8 g/l juste avant la caisse de tête. Et la suspension aqueuse de fibres recyclées est coulée sur la toile de la machine à papier, qui se déplace à une vitesse de 250 m/mn.

On obtient une production de 4,10 tonnes/h de papier couverture.

En comparaison avec l'exemple témoin 2, on met en évidence les avantages apportés par le traitement de l'eau sous toile à l'aide d'une préparation enzymatique contenant des cellulases : une plus grande dilution en caisse de tête et une augmentation de la vitesse de la machine, donc un gain de productivité.

### Exemple 4

Dans cet exemple, on traite par des préparations enzymatiques selon l'invention à la fois l'eau sous toile comme dans l'exemple 3 et à la fois la composition papetière.

A cette fin, la suspension papetière décrite dans l'exemple témoin 2 est traitée dans un cuvier, alors que cette suspension de fibres est à 45°C et a un pH de 6, par une préparation enzymatique à base de cellulases et d'hémicellulases, à raison de 1,2 litre/tonne en sec de papier produit, d'une solution commercialisée sous l'appellation Multifect L 250™ par la société Finnish Sugar Co Ltd, ou par une préparation enzymatique liftase A40 déjà citée.

On laisse réagir durant le temps de passage dans le cuvier qui correspond à 30 minutes environ. La suspension traitée est envoyée en caisse de tête après avoir été diluée jusqu'à une concentration de 9,5 g/l par l'eau sous toile traitée comme dans l'exemple 4 par une préparation enzymatique.

La suspension aqueuse est coulée sur la toile de la machine à papier qui se déplace à une vitesse de 260 m/mn. La production atteint 4,30 t/heure.

Par comparaison avec l'exemple 4, on améliore encore la production de la machine à papier par un traitement combiné de l'eau sous toile et de la composition papetière à l'aide chaque fois de préparations enzymatiques.

## Revendications

1. Procédé de traitement de l'eau recyclée servant à diluer une pâte papetière destinée à être égouttée en vue d'améliorer son égouttabilité, caractérisé en ce qu'on fait agir sur l'eau recyclée une préparation enzymatique contenant des cellulases et/ou des hémicellulases et/ou d'autres enzymes ayant une action sur tout ou partie des constituants de fibres cellulosiques.

2. Procédé selon la revendication 1, caractérisé en ce qu'on fait agir la préparation enzymatique sur de l'eau recyclée destinée à diluer une pâte papetière devant être épurée puis passée dans un filtre épaississeur.

3. Procédé selon la revendication 1, caractérisé en ce qu'on fait agir la préparation enzymatique sur l'eau sous toile d'une machine à papier, recyclée et destinée à diluer une composition papetière avant son dépôt sur la toile .

4. Procédé selon une des revendications 1 à 3, caractérisé en ce qu'on fait agir la préparation enzymatique dans au moins un cuvier de passage de l'eau recyclée.

5. Procédé selon une des revendications 1 à 4, caractérisé en ce que la pâte papetière à diluer par l'eau recyclée traitée est une pâte à base de fibres recyclées ou vieux papiers.

6. Procédé selon une des revendicationq 1 à 5, caractérisé en ce que la préparation enzymatique est introduite dans l'eau recyclée à raison de 0,1 kg/tonne à 20 kg/tonne compté par rapport à la quantité en sec de pâte papetière à diluer et pour une préparation enzymatique possédant une activité C₁ de 0,168 USI/mg de poudre, une activité Cₓ de 3,91 USI/mg de poudre et une activité xylanasique de 31 USI/mg de poudre pour la poudre Maxazyne CL 2000.

7. Procédé selon une des revendications 1 à 6, caractérisé en ce que la préparation enzymatique contient des enzymes choisies parmi celles dérivées des microorganismes Trichoderma viridae, Aspergillus niger, Humicola insolens et Cellulomonas.

8. Procédé selon une des revendications 1 à 7, caractérisé en ce que le traitement enzymatique de l'eau recyclée est combiné à un traitement par une préparation enzymatique de la pâte papetière.

9. Procédé selon la revendication 4, caractérisé en ce que l'eau recyclée dans le cuvier est amenée au pH désiré par ajout d'acide.

10. Procédé selon une des revendications 4 à 9, caractérisé en ce que le volume du cuvier de passage de l'eau recyclée est déterminé en fonction du temps de traitement désiré de l'eau recyclée par la préparation enzymatique.

## Claims

1. Process for the treatment of recycled water used for diluting a papermaking pulp which is to be drained in order to improve its drainability, characterized in that on to the recycled water is made to act an enzymatic preparation containing cellulases and/or hemicellulases and/or other enzymes having an action on all or part of the constituents of the cellulose fibres.

2. Process according to claim 1, characterized in that the enzymatic preparation is made to act on the recycled water for diluting a papermaking pulp which has to be purified and then passed into a thickening filter.

3. Process according to claim 1, characterized in that the enzymatic preparation is made to act on the recycled under cloth water of a papermaking machine and used for diluting a papermaking composition prior to its deposition on the cloth.

4. Process according to any one of the claims 1 to 3, characterized in that the enzymatic preparation is made to act in at least one recycled water passage vat.

5. Process according to any one of the claims 1 to 4, characterized in that the papermaking pulp to be diluted by the treated recycled water is a pulp based on recycled fibres or waste paper.

6. Process according to one of the claims 1 to 5, characterized in that the enzymatic preparation is introduced into the recycled water at a rate of 0.1 to 20 kg/tonnes, based on the dry quantity of papermaking pulp to be diluted and for an enzymatic preparation having a C₁ activity of 0.168 USI/mg of powder, a Cₓ activity of 3.91 USI/mg of powder and a xylanase activity of 31 USI/mg of powder for the MAXAZYME CL 2000 powder.

7. Process according to one of the claims 1 to 6, characterized in that the enzymatic preparation contains enzymes chosen from among those derived from the microorganisms Trichoderma viridae, Aspergillus niger, Humicola insolens and Cellulomonas.

8. Process according to one of the claims 1 to 7, characterized in that the enzymatic treatment of the recycled water is combined with a treatment by a papermaking pulp enzymatic preparation.

9. Process according to claim 4, characterized in that the recycled water in the vat is brought to the desired pH-value by adding acid.

10. Process according to any one of the claims 4 to 9, characterized in that the volume of the recycled water passage vat is determined as a function of the desired treatment time of the recycled water by the enzymatic preparation.

## Patentansprüche

1. Verfahren zur Behandlung von Kreislaufwasser, das zum Verdünnen eines zum Abtropfen vorgesehenen Papierfaserbreis dient, um dessen Abtropfbarkeit zu verbessern, **dadurch gekennzeichnet, daß** auf das Kreislaufwasser eine enzymatische Zubereitung einwirken gelassen wird, die Cellulasen und/oder Hemicellulasen und/oder andere Enzyme enthält, die auf sämtliche oder einen Teil der Bestandteile der Cellulosefasern eine Wirkung ausüben.

2. Verfahren nach Anspruch 1**, dadurch gekennzeichnet, daß** die enzymatische Zubereitung auf das Kreislaufwasser einwirken gelassen wird, das zum Verdünnen eines Papierfaserbreis vorgesehen ist, der gereinigt werden soll, bevor er in ein Eindickfilter geleitet wird.

3. Verfahren nach Anspruch 1**, dadurch gekennzeichnet, daß** man die enzymatische Zubereitung auf das unter dem Sieb einer Papiermaschine wiedergewonnene Wasser einwirken läßt, das zum Verdünnen einer Papierfaserzusammensetzung vor deren Aufgabe auf das Sieb vorgesehen ist.

4. Verfahren nach einem der Ansprüche 1 bis 3**, dadurch gekennzeichnet, daß** die enzymatische Zubereitung in wenigstens einem Durchlauftrog für das Kreislaufwasser einwirken gelassen wird.

5. Verfahren nach einem der Ansprüche 1 bis 4**, dadurch gekennzeichnet, daß** der Papierfaserbrei, der mit dem behandelten Kreislaufwasser verdünnt werden soll, ein Brei auf der Grundlage von wiederverwerteten Fasern oder Altpapier ist.

6. Verfahren nach einem der Ansprüche 1 bis 5**, dadurch gekennzeichnet, daß** die enzymatische Zubereitung dem Kreislaufwasser in einem Verhältnis von 0,1 bis 20 kg/t zugegeben wird, berechnet in bezug auf die Feststoffmenge des zu verdünnenden Papierfaserbreis und für eine enzymatische Zubereitung, die eine C₁-Aktivität von 0,168 U/mg Pulver, eine Cₓ-Aktivität von 3,91 U/mg Pulver und eine Xylanase-Aktivität von 31 U/mg Pulver für das Pulver von Maxazyme CL 2000 besitzt.

7. Verfahren nach einem der Ansprüche 1 bis 6**, dadurch gekennzeichnet, daß** die enzymatische Zubereitung Enzyme enthält, die aus den von den Mikroorganismen Trichoderma viridae, Aspergillus niger, Humicola insolens und Cellulomonas abgeleiteten Enzymen ausgewählt sind.

8. Verfahren nach einem der Ansprüche 1 bis 7**, dadurch gekennzeichnet, daß** die Enzymbehandlung des Kreislaufwassers mit einer Behandlung des Papierfaserbreis durch eine enzymatische Zubereitung kombiniert wird.

9. Verfahren nach Anspruch 4**, dadurch gekennzeichnet, daß** das Kreislaufwasser im Trog durch Säurezugabe auf den gewünschten pH-Wert gebracht wird.

10. Verfahren nach einem der Ansprüche 4 bis 9**, dadurch gekennzeichnet, daß** das Fassungsvermögen des Durchlauftrogs für das Kreislaufwasser in Abhängigkeit von der gewünschen Zeit der Behandlung des Kreislaufwassers mit der enzymatischen Zubereitung bestimmt wird.
